# EUROPEAN PATENT SPECIFICATION

(11) **EP 2 265 106 B1**
(45) Date of publication and mention of the grant of the patent: **27.03.2013**
(21) Application number: 07823200.6
(22) Date of filing: 17.10.2007
(51) Int. Cl.: A01C 11/02, A01G 23/02, A01C 11/00

(54) **PLANTING DEVICE FOR PLANTING SEEDLINGS**
PFLANZGERÄT FÜR DAS PFLANZEN VON SÄMLINGEN
DISPOSITIF DE PLANTATION DE PLANTATION DE SEMIS

(30) Priority: 01.11.2006 FI 20065691
(43) Date of publication of application: 29.12.2010
(73) Proprietor: Meriläinen, Antti, 88300 Paltamo (FI)
(72) Inventor: Meriläinen, Antti, 88300 Paltamo (FI)
(74) Representative: Vanhala, Jorma Kalevi
(86) International application number: PCT/FI2007/050563
(87) International publication number: WO 2008/053071

(56) References cited:
- DE-A1- 10 251 985
- FI-B- 94 477
- FI-U1- 5 673
- FR-A- 1 375 118
- FR-A1- 2 719 543
- US-A- 4 459 924

## Description

This invention relates to a planting device for planting seedlings, comprising at least two planting heads, an intermediate bar connecting the planting heads, mounting means for mounting the planting device to a vehicle, and planting means arranged in the planting heads.

Today, mechanized planting of seedlings in connection with forest regeneration is becoming increasingly common. The placement of a seedling in the soil requires careful selection of the planting spot and careful preparation of the spot for planting. Scarification of the planting spot is required so that the seedling can be placed as advantageously as possible from the silvicultural aspect. Even on sloping terrain, it must be possible to plant the seedling vertically in the desired depth, and it must be possible to compact the planting spot appropriately. When selecting the planting spot, it must be possible to take into account naturally regenerated plants and the properties of the soil. It must be possible to vary the planting method flexibly according to need. At a spot with a thick layer of mor, mounding is the most preferred alternative, while in mineral soil the planting spot may be screefed, dug or levelled. When required, the planting site must be cleared of slash and other obstacles. In connection with the planting, the application of fertilizers and pesticides must also be possible.

The planting machines disclosed in publications CA 2,281,161, US 4,067,268, US 2004/0,050,310 and EP 0,205,412 aim to prepare the planting spot for the seedling by various means, after which the seedling is placed in position and, finally, the planting spot is compacted. The planting machines are arranged in connection with the excavator boom, for example, and they are operated from the excavator cab. The seedlings are planted one at a time by positioning the planting machine at the desired spot, followed by the planting cycle.

Finnish utility model Reg. No. 5,673 discloses a planting machine with at least two planting heads for planting at least two seedlings during the same cycle. The device prepares a mound at the planting spot for the seedling, using two blades digging away from each other. The mutual distance of the planting heads and their position in relation to the body of the device cannot be adjusted, which is why the device is difficult to use on rough and varying terrain.

Document FR1375118 discloses a planting device according to the preamble of Claim 1.

The known planting machines suffer from problems relating to adjusting the depth and ensuring the correct position for the seedling. The problems associated with the known solutions become more pronounced on rough terrain and terrain with a thick dry peat layer, as well as on terrain where the type of soil varies. Even at its best, the planting output is only in the range of 200-300 seedlings per hour, as the preparation of the planting spot and the positioning of the planting machine take most of the time in the planting cycle. Increased efficiency of planting machines is required to be able to improve the competitiveness of mechanized planting.

The objective of the invention is to provide an improved planting device and method for planting seedlings. The planting device enables appropriate planting of seedlings in different terrain conditions. The output of a device according to the invention is considerably improved compared with the present machines, because it can plant two seedlings simultaneously and the working cycle is carried out automatically. The device can prepare the planting spot in a way that is appropriate in the situation, and the planting heads of the device efficiently adapt to sloping terrain and the correct planting depth can be selected for the seedling. After planting, the planting spot is compacted by suitable means.

A planting device according to the invention comprises at least two planting heads, an intermediate bar connecting the planting heads, mounting means for mounting the planting device to a vehicle and planting means arranged in the planting heads. The intermediate bar of the planting device comprises a body and an extension that is mobile in relation to the body. Thus, the intermediate bar is formed to be length adjustable, so that the mutual distance of the planting heads can be adjusted as required. Furthermore, the intermediate bar is formed to be tiltable, and in connection with it there is arranged a tilting actuator for tilting the bar. The planting heads are connected to the ends of the intermediate bar by hinges, and in connection with the planting heads there are arranged actuators for tilting the planting heads in relation to the intermediate bar. A planting device according to the invention prepares the planting spot in an appropriate manner: by mounding, digging, levelling, clearing slash, etc. The planting heads are formed so that they can be used for both backhoe and face excavation. Thus, the digging means in the planting heads can, for example, perform mounding either forward or backward. The digging means are used to shape and compact the planting spot, after which the planting tube with its planting claw is lowered to a suitable planting depth. The planting claw opens sufficient space for the seedling, and the seedling is fed from the seedling tray through the planting tube into the planing spot. The functioning of the seedling tray feeding mechanism is secured by freewheels clutches. Finally, the seedling root is compacted on both sides with pads. The planting heads can be positioned according to the inclination of the terrain, so that the seedlings are placed vertically. The motion of the planting heads can be synchronized, or they can take different positions independent of each other. When required, a suitable amount of fertilizer and/or pesticide is applied into the planting spot, by means of units located in connection with the seedling tube, for example.

The invention enables different working methods for planting seedlings with two planting heads that are controlled and positioned either independently of each other or together synchronized with each other. In advantageous conditions, the planting spots for the seedlings may first be prepared for planting using both planting heads simultaneously, after which the planting cycle is started in both planting heads, simultaneously as well. This doubles the efficiency of the method compared with a one-headed planting machine.

In more challenging conditions, such as sloping and varying terrain, the planting spot for one planting head may be prepared first by mounding, for example. Then the planting spot for the other planting head is prepared by levelling, for example. When the preparation of both planting spots is complete, both planting heads are positioned vertically to the planting spots and the planting cycle is started simultaneously in both. In this case, too, considerable advantage is achieved compared with a one-headed planting machine.

According to the studies conducted, a method according to the invention can increase the planting speed of seedlings by 50-100 per cent compared with the known methods.

The present invention provides a planting device that reduce the disadvantages and problems associated with the prior art.

The said benefits are achieved by a planting device according to the invention, characterized by what is specified in the Claims.

The invention is described in detail below, using some preferred embodiments as examples and referring to the enclosed drawings.
Figure 1 is a schematic representation of a planting device according to the invention viewed from the front.
Figure 2 shows a device according to a preferred embodiment viewed from the side.
Figure 3 shows the planting of a seedling viewed from the side using the planting device shown in Figure 2.
Figure 4 shows the planting of a seedling on a sloping terrain viewed from the front.

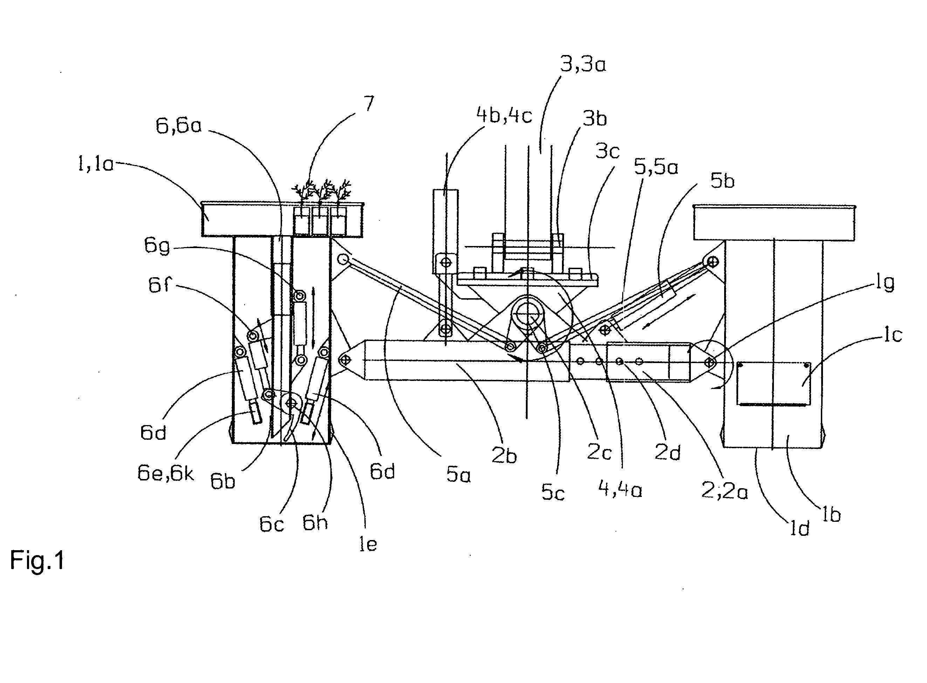

In Figures 1-4 there is shown a planting device according to the invention, comprising two planting heads 1, an intermediate bar 2 between the planting heads, mounting means 3 for mounting the device to a vehicle, units 4 and 5 for positioning the planting heads, and planting means 6.

The planting heads 1 form a housing-like structure, in the upper part of which there is formed a seedling tray 1a with its equipment. The lower part of the planting heads 1 forms the faces 1 b enabling digging, and at their bottom the digging claws 1f. Lowest are the bottom plates 1 d, shaped appropriately for the shaping and compacting of the planting spot. In the housing there are arranged an adequate number of service and installation doors 1 c for the installation, adjustment and maintenance of the planting means 6. The bottom plates 1 d are wavelike in shape, and their edges are equipped with a closing plate 1 e, preventing soil from being squeezed away from the planting spot. The wavelike shape of the bottom plate helps to achieve a more compact mound, as the ground contacting area is smaller and the shape prevents soil from being squeezed away.

The planting heads 1 are connected to the ends of the intermediate bar 2 through the hinges 1 g, enabling them to be tilted in relation to the intermediate bar 2. The intermediate bar is formed of the body 2b and the extension 2a, mobile in relation to each other. Thus, the length of the intermediate bar can be adjusted in a manner depending on the dimensioning of the telescope structure 2a, 2b or a corresponding structure. The length of the intermediate bar may be adjusted steplessly using a suitable actuator (not shown) or the locking organs 2d. The intermediate bar is connected to the vehicle boom mounting means 3 through the hinge 2c located in connection with the body 2b.

There are quick-mounting means 3c attached to the vehicle boom 3 through the hinge 3b. Furthermore, the quick-mounting means 3c are attached to the intermediate bar joint 2c through the mounting frame 4a.

The position of the intermediate bar is adjusted with the tilting actuator 4b, coupled between the intermediate bar body 2b and the mounting frame 4a. The positions of the planting heads are adjusted with the actuators 5, including the connecting rods 5a and the swing 5c connecting them and the actuator 5b. In a preferred embodiment, the connecting rods are variable actuators, which considerably increases the range of planting head movements.

The planting means 6 are formed by the fixed section 6a and mobile section 6b of the planting tube, with the mobile section moving in relation to the fixed section with the aid of actuator 6g. In the lower part of the mobile section 6b there is the planting claw 6c, connected by the hinge 6d. The planting claw 6c is steered round the joint 6h by the actuator 6f, also located in connection with the mobile section. Furthermore, the planting means include the compacting pads 6e attached to the housing of the planting head, adapted substantially in an oblique position towards the planting spot. The pads are adapted to pass through the guides 6k, and they are operated by the actuators 6d.

The seedling tray 1 a is equipped with the actuator 1 h3 that transports the seedlig 7 into the planting tube using the mechanism 1 h. The mechanism includes the freewheel clutches 1 h1 and 1h2, of which the first freewheel clutch 1h1 ensures that the seedling conveyor cannot reverse when the device tilts. The second freewheel clutch 1h2 prevents the mechanism 1h from shifting back during the return motion of the actuator 1h3. The freewheel clutches 1 h1 and 1h2 are attached to the seedling conveyor drive shaft 1h4, which is bearing-mounted to the seedling tray by the bearing bracket 1h5. The freewheel clutches 1h1 and 1h2 in the seedling transport mechanism 1h may be replaced with a ratchet wheel mechanism (not shown) that ensures reliable functioning of the seedling conveyor.

When required, the planting means are equipped with units for the application of fertilizers and pesticides that may be either solutions or granules (not shown).

A planting device according to the invention functions as follows. Planting is started by setting a suitable distance between the planting heads by adjusting the length of the intermediate bar 2. Then the planting heads 1 are positioned either together or individually close to the planting spot using the adjustment options provided by the working machine boom 3 and the planting device itself. Based on the properties of the planting spot, a suitable way of preparing the planting spot is chosen. Using the practically symmetrically located digging organs 1b and 1f, either a planting mound is formed by inverting the dry peat, or an appropriate space is dug in mineral soil or the planting spot is otherwise cleared. In a normal working situation, the excavator is reversed a required distance, after which working motions are performed as backhoe excavation, pulling towards the excavator. Also, it is possible to perform the working motions into two directions because of the symmetry of the digging organs. When required, mineral soil is arranged to the planting spot, using the digging organs. Then the planting heads are positioned vertically and the mobile section 6b of the planting means is lowered to a suitable depth, and then the planting claw 6c penetrates the ground. The claw is turned using its actuator 6f, and a suitable space for the ball seedling 7 is formed. Almost simultaneously with the opening of the claw, using the seedling tray means 1h, a ball seedling is fed into the planting tube, which directs the seedling into the planting hole. The lower part of the planting tube is raised to high position, and the planting cycle is completed by compacting the roots of the seedling to suitable compactness using the compacting pads 6e. The planting cycle is complete, and the other actuators also return to their initial positions for the planting of the next seedling.

The device may also be used for planting individual seedlings, as the planting heads can be operated and controlled one at a time as well. For example, in a situation where one planting head meets rock, stone or some other planting obstacle, the other planting head can be used normally to plant a seedling.

The planting means and seedling tray means are controlled using a suitable control system (not shown) with working cycles most advantageously arranged to be carried out automatically. In a preferred embodiment, the control system is, for example, a sequential control system carried out using hydraulic components.

In one embodiment of the invention, the compacting pads 6e and the actuators 6d that operate them are connected to the mobile section 6b of the seedling tube, so that compacting can be carried out in the same way regardless of the planting depth.

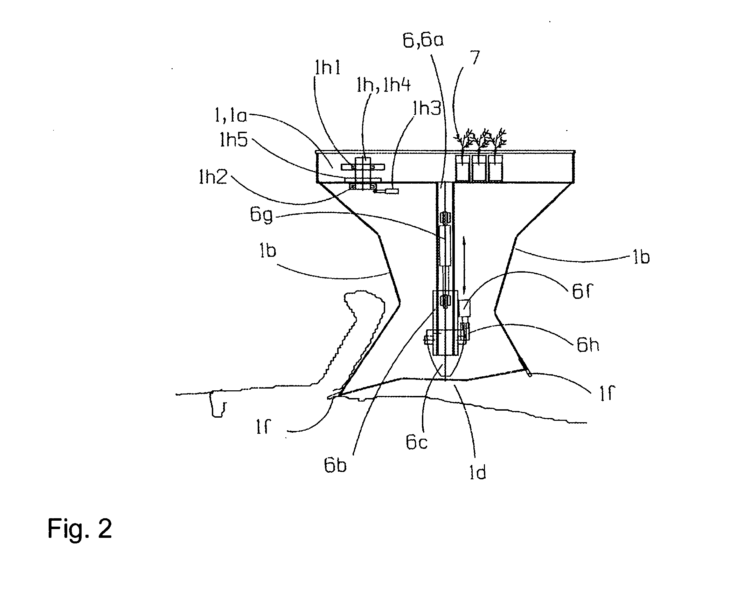

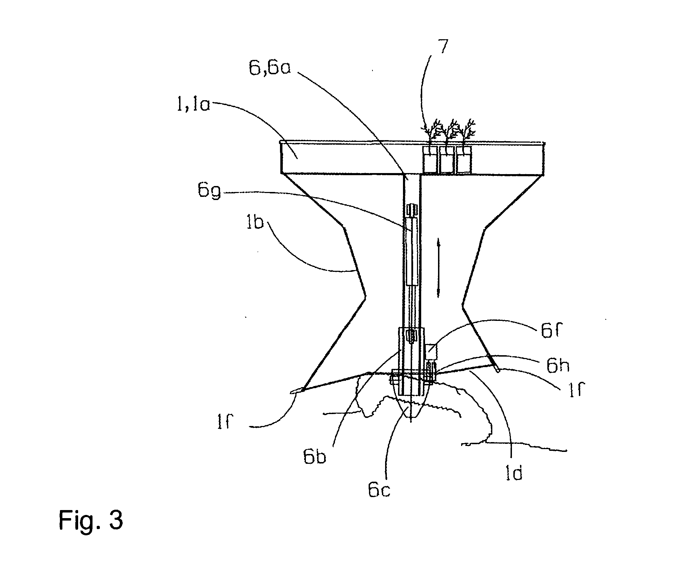

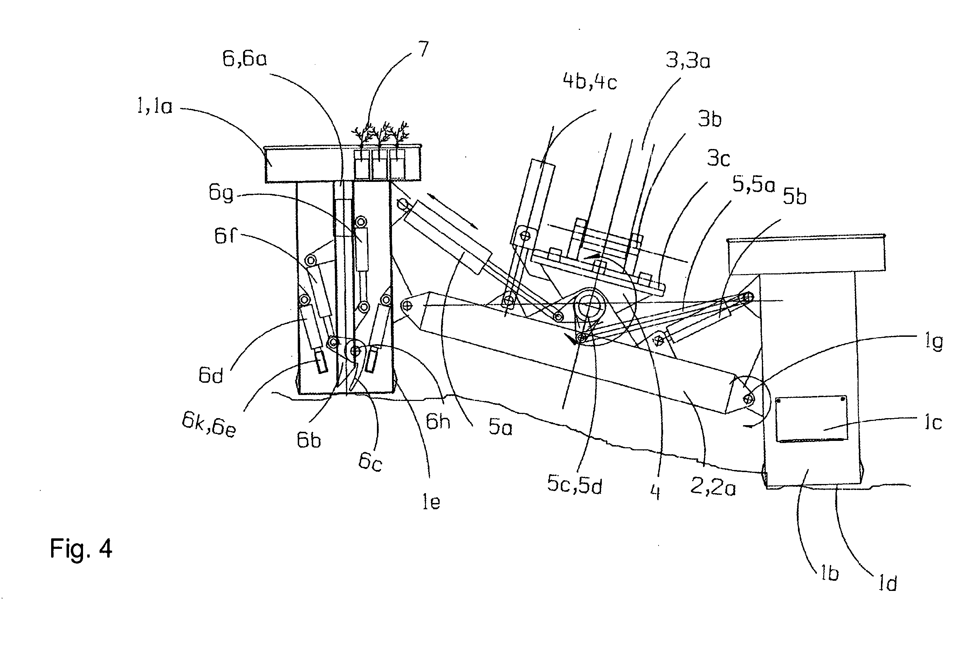

The mobile section 6b and fixed section 6a of the planting tube are most preferably made of a suitable closed profile, such as a square, rectangular or circular hollow section, adapted to slide one within the other. In the embodiment shown in Figures 1 and 4, the mobile section 6b is adapted to move inside the fixed section, while in the solution shown in Figures 2 and 3 the mobile section is the outer and the fixed section the inner section.

The Figures and the related description are intended for illustration of the present invention only. The details of the planting device may vary within the appended Claims and the inventive idea disclosed in the description of the invention. For example, the actuators used in the device may be fully mechanical and manually adjusted, as well as fully automatical, advanced actuators, such as hydraulic units controlled digitally or by servo technology.

It is clear to one skilled in the art that the dimensions of the device and its technical solutions may vary depenging on the purpose of use. Furthermore, it is evident to one skilled in the art that the embodiment of the invention may vary depending on the operating conditions, customer needs, working methods and manufacturing solutions implemented in connection with production.

## Claims

1. A planting device for planting seedlings, comprising at least two planting heads (1), an intermediate bar (2) connecting the planting heads, mounting means (3) for mounting the planting device to a vehicle and planting means (6) arranged in the planting heads, **characterized in that**
- the intermediate bar (2) comprises a body (2b) and an extension (2a) that is mobile in relation to the body, to form the intermediate bar length adjustable for adjustment of the mutual distance of the planting heads (1),
- the intermediate bar (2) is formed tiltable, and in connection with it there is arranged a tilting actuator (4b) for tilting the intermediate bar and
- the planting heads (1) are connected to the ends of the intermediate bar (2) through hinges (1g) and in connection with the planting heads there are arranged actuators (5) for tilting the planting heads in relation to the intermediate bar (2).

2. A device according to Claim 1, **characterized in that** the planting heads (1) form a housing-like structure, in the upper part of which there is formed a seedling tray (1a) and in the lower part of which there are symmetrically located faces (1b) enablinging backhoe and face excavation and, at the bottom of these, digging claws (1f).

3. A device according to Claim 1 or 2, **characterized in that** the planting heads have wavelike-shaped bottom plates (1d), preferably equipped with plates (1e) preventing soil from being squeezed away.

4. A device according to any of Claims 1 to 3, **characterized in that** the planting means (6) comprise a planting tube with a fixed section (6a) and a mobile section (6b) and an actuator (6g) for moving the mobile section in relation to the fixed section.

5. A device according to Claim 4, **characterized in that** the mobile section (6b) has a planting claw (6c) connected by a hinge (6h) and an actuator (6f) for turning the planting claw round the joint (6h).

6. A device according to Claim 4 or 5, **characterized in that** the mobile section (6b) and fixed section (6a) of the planting tube are made of a closed profile, such as a square, rectangular or circular hollow section, adapted to slide one within the other.

7. A device according to any of Claims 1 to 6, **characterized in that** the planting equipment comprises compacting pads (6e) for compacting the planting spot and actuators (6d) for operating the compacting pads.

8. A device according to Claim 7, **characterized in that** the compacting pads (6e) and the actuators (6d) for operating them are arranged in the mobile section (6b) of the planting tube to enable compacting at different planting depths.

9. A device according to any of Claims 2 to 8, **characterized in that** the seedling tray (1a) is equipped with an actuator (1h3) and mechanism (1h) for transferring the seedlings (7) into the planting tube (6a, 6b).

10. A device according to any of Claims 2 to 9, **characterized in that** it has a sequential control system carried out using hydraulic components for the controlling of the planting means (6) and seedling tray (1 a) means.

11. A device according to any of Claims 1 to 10, **characterized in that** the planting heads 1 can be positioned close to the planting spot either together or individually.

## Patentansprüche

1. Ein Pflanzgerät für das Pflanzen von Sämlingen, umfassend zumindest zwei Pflanzköpfe (1), eine Zwischenstange (2), die die Pflanzköpfe verbindet, Befestigungsmittel (3) zum Befestigen des Pflanzgeräts an einem Fahrzeug, und in den Pflanzköpfen angeordnete Pflanzmittel (6), **dadurch gekennzeichnet, dass**
- die Zwischenstange (2) einen Körper (2b) und eine Verlängerung (2a) umfasst, die bezogen auf den Körper beweglich ist, um die einstellbare Länge der Zwischenstange, für das Einstellen des gegenseitigen Abstands der Pflanzköpfe (1) zu bilden,
- die Zwischenstange (2) kippbar ausgebildet ist, und in Verbindung mit ihr ist ein Kippbedienteil (4b) zum Kippen der Zwischenstange angeordnet und
- die Pflanzköpfe (1) sind mit den Enden der Zwischenstange (2) über Gelenke (1g) verbunden und in Verbindung mit den Pflanzköpfen sind Bedienteile (5) zum Kippen der Pflanzköpfe in Bezug zu der Zwischenstange (2) angeordnet.

2. Ein Gerät gemäß Anspruch 1, **dadurch gekennzeichnet, dass** die Pflanzköpfe (1) eine gehäuseähnliche Struktur bilden, in dessen oberen Bereich ein Sämlingsfach (1a) ausgebildet ist und in dessen unteren Bereich symmetrisch angeordnete Fronten (1b) vorhanden sind, die Erdaushub mit Tieflöffel und Front ermöglichen, und, an deren Boden, Grab-Klauen (1f).

3. Ein Gerät gemäß Anspruch 1 oder 2, **dadurch gekennzeichnet, dass** die Pflanzköpfe wellenartig geformte Bodenplatten (1d) aufweisen, vorzugsweise ausgestattet mit Platten (1e), die Erdboden vom weggedrückt werden bewahren.

4. Ein Gerät gemäß einem der Ansprüche 1 bis 3, **dadurch gekennzeichnet, dass** die Pflanzmittel (6) einen Pflanzkanal mit einem befestigten Abschnitt (6a) und einem beweglichen Abschnitt (6b) und einem Bedienteil (6g) zum Bewegen des beweglichen Abschnitts bezogen auf den befestigten Abschnitt umfassen.

5. Ein Gerät gemäß Anspruch 4, **dadurch gekennzeichnet, dass** der bewegliche Abschnitt (6b) eine Pflanz-Klaue (6c) aufweist, verbunden über ein Gelenk (6h), und ein Bedienteil (6f), für das Drehen der Pflanz-Klaue um das Gelenk (6h).

6. Ein Gerät gemäß Anspruch 4 oder 5, **dadurch gekennzeichnet, dass** der bewegliche Abschnitt (6b) und der befestigte Abschnitt (6a) des Pflanzkanals aus einem geschlossenen Profil hergestellt sind, wie zum Beispiel aus einem quadratischen, rechteckigen oder kreisrunden hohlen Abschnitt, passend damit eine in der anderen gleiten kann.

7. Ein Gerät gemäß einem der Ansprüche 1 bis 6, **dadurch gekennzeichnet, dass** die Pflanzausrüstung Verdichtungsblöcke (6e) zum Verdichten des Pflanzortes umfasst und Bedienteile (6d) zum Betreiben der Verdichtungsblöcke.

8. Ein Gerät gemäß Anspruch 7, **dadurch gekennzeichnet, dass** die Verdichtungsblöcke (6e) und die Bedienteile (6d) für ihren Betrieb in dem beweglichen Abschnitt (6b) des Pflanzkanals angeordnet sind, um Verdichten bei unterschiedlichen Pflanztiefen zu ermöglichen.

9. Ein Gerät gemäß einem der Ansprüche 2 bis 8, **dadurch gekennzeichnet, dass** das Sämlingsfach (1 a) mit einem Bedienteil (1 h3) und Mechanismus (1 h) für das Überführen der Sämlinge (7) in den Pflanzkanal (6a, 6b) ausgestattet ist.

10. Ein Gerät gemäß einem der Ansprüche 2 bis 9, **dadurch gekennzeichnet, dass** es ein Folgeregelungssystem aufweist, das unter Verwenden hydraulischer Komponenten ausgeführt wird, für das Ansteuern der Pflanzmittel (6) und Sämlingsfachmittel (1a).

11. Ein Gerät gemäß einem der Ansprüche 1 bis 10, **dadurch gekennzeichnet, dass** die Pflanzköpfe 1 dicht an den Pflanzort positioniert werden können, entweder zusammen oder einzeln.

## Revendications

1. Dispositif de plantation pour planter des semis, comprenant au moins deux têtes de plantation (1), une barre intermédiaire (2) raccordant les têtes de plantation, des moyens de montage (3) pour monter le dispositif de plantation sur un véhicule et des moyens de plantation (6) agencés dans les têtes de plantation, **caractérisé en ce que** :
la barre intermédiaire (2) comprend un corps (2b) et une extension (2a) qui est mobile par rapport au corps, afin de former la longueur de barre intermédiaire ajustable pour l'ajustement de la distance mutuelle des têtes de plantation (1),
la barre intermédiaire (2) est formée de manière à être inclinable, et à ce propos, on agence un actionneur d'inclinaison (4b) pour incliner la barre intermédiaire, et
les têtes de plantation (1) sont raccordées aux extrémités de la barre intermédiaire (2) par le biais de charnières (1g), et à propos des têtes de plantation, on agence des actionneurs (5) pour incliner les têtes de plantation par rapport à la barre intermédiaire (2).

2. Dispositif selon la revendication 1, **caractérisé en ce que** les têtes de plantation (1) forment une structure en forme de boîtier, dans la partie supérieure de laquelle on forme une caissette plate de semis (1a) et dans la partie inférieure de laquelle on trouve des faces (1 b) positionnées de manière symétrique de sorte à ramener et à éloigner les têtes de plantation du véhicule et au fond de ces faces, on trouve des griffes d'excavation (1f).

3. Dispositif selon la revendication 1 ou 2, **caractérisé en ce que** les têtes de plantation ont des plaques inférieures en forme d'onde (1 d), de préférence équipées de plaques (1 e) empêchant la compression du sol.

4. Dispositif selon l'une quelconque des revendications 1 à 3, **caractérisé en ce que** les moyens de plantation (6) comprennent un tube de plantation avec une section fixe (6a) et une section mobile (6b) et un actionneur (6g) pour déplacer la section mobile par rapport à la section fixe.

5. Dispositif selon la revendication 4, **caractérisé en ce que** la section mobile (6b) a une griffe de plantation (6c) raccordée par une charnière (6h) et un actionneur (6f) pour faire tourner la griffe de plantation autour de l'articulation (6h).

6. Dispositif selon la revendication 4 ou 5, **caractérisé en ce que** la section mobile (6b) et la section fixe (6a) du tube de plantation sont réalisées avec un profil fermé, tel qu'une section creuse carrée, rectangulaire ou circulaire, adaptée pour coulisser l'une à l'intérieur de l'autre.

7. Dispositif selon l'une quelconque des revendications 1 à 6, **caractérisé en ce que** l'équipement de plantation comprend des patins de compactage (6e) pour compacter le lieu de plantation et des actionneurs (6d) pour actionner les patins de compactage.

8. Dispositif selon la revendication 7, **caractérisé en ce que** les patins de compactage (6e) et les actionneurs (6d) pour les actionner, sont agencés dans la section mobile (6b) du tube de plantation pour permettre le compactage à différentes profondeurs de plantation.

9. Dispositif selon l'une quelconque des revendications 2 à 8, **caractérisé en ce que** la caissette plate de semis (1 a) est équipée avec un actionneur (1 h3) et le mécanisme (1 h) pour transférer les semis (7) dans le tube de plantation (6a, 6b).

10. Dispositif selon l'une quelconque des revendications 2 à 9, **caractérisé en ce qu'**il a un système de commande séquentielle réalisé à l'aide de composants hydrauliques pour commander les moyens de plantation (6) et les moyens de caissette plate de semis (1 a).

11. Dispositif selon l'une quelconque des revendications 1 à 10, **caractérisé en ce que** les têtes de plantation (1) peuvent être positionnées à proximité du lieu de plantation ensemble ou individuellement.
